# EUROPÄISCHE PATENTANMELDUNG

(11) **EP 2 196 439 A1**
(43) Veröffentlichungstag der Anmeldung: **16.06.2010**
(21) Anmeldenummer: 09015353.7
(22) Anmeldetag: 11.12.2009
(51) Int. Cl.: C02F 3/00, C02F 3/30

(54) **Verfahren zur Regelung der Nitrifikation und/oder Denitrifikation einer Kläranlage**

(30) Priorität: 03.03.2009 DE 102009011107; 11.12.2008 DE 102008061331
(71) Anmelder: Envicon Klärtechnik Verwaltungsgesellschaft mbH, 46537 Dinslaken (DE)
(72) Erfinder: Bassfeld, Andreas, 46537 Dinslaken (DE); Lodde, Christopf, 44797 Bochum (DE)
(74) Vertreter: Demski, Siegfried

(57) **Zusammenfassung**

Die Erfindung betrifft ein Verfahren zur Regelung der Nitrifikation und/oder Denitrifikation einer Kläranlage, wobei der Effekt des pH-Anstiegs auf Grund eines Belastungsstoßes sich in der biologischen Stufe oder bereits in den Becken und Leitungen davor beobachten lässt. So kann auch eine vor der biologischen Stufe angebrachte pH-Wert-Messung in eine Regelung mit einbezogen werden, um frühzeitig einen Belastungsstoß aufgrund externer oder interner Ereignisse zu erkennen.

## Beschreibung

Die Erfindung betrifft ein Verfahren zur Regelung der Nitrifikation und/oder Denitrifikation einer Kläranlage, wobei zumindest ein Parameter, beispielsweise der pH-Wert, das Redoxpotential oder der Sauerstoffgehalt, zur Regelung verwendet wird.

Regelungsvertahren zur Reinigung von Abwässern sehen im Allgemeinen vor, die Abwässer, die in einem biologischen Prozess gereinigt werden sollen, zumindest partiell zu belüften. Dazu werden in zeitlich alternierender Abfolge Belüftungsphasen eingeleitet, die sich dadurch auszeichnen, dass in die Abwässer Sauerstoff eingetragen wird. Dabei wird die Belüftung in der Regel mit Druckbelüftung mit Gebläsen oder Turboverdichtern oder durch Oberflächenbelüftung mit Mammutrotoren oder Kreiselbelüftern erreicht und Luft, die Sauerstoff enthält, in das Abwasser eingeblasen. Hintergrund dieses Vorgehens ist, die anteilig im Abwasser vorhandenen Ammoniumverbindungen durch Oxidation in Nitrat zu überführen. Insofern spricht man bei dem Belüftungsvorgang auch von einer Nitrifikationsphase, während die Phase ohne Belüftung bis zum vollständigen Nitratabbau als Denitrifikationsphase bezeichnet wird. Danach kann eine anaerobe Phase (Bio-P-Elimination) folgen, wenn keine erneute Belüftung unmittelbar erfolgt. Zu Beginn der Nitrifikationsphase werden gleichzeitig Kohlenstoffverbindungen abgebaut.

Es ist entscheidend, dass in dem Klärprozess nach der Nitrifikationsphase eine Denitrifikationsphase folgt, damit das entstandene Nitrat unter anoxischen Bedingungen durch spezielle Mikroorganismen zu elementarem Stickstoff reduziert wird. Die für diese Phase wichtigen Mikroorganismen haben die Eigenschaft, unter anaeroben Bedingungen das in der Nitrifikationsphase gebildete Nitrat umzusetzen. Der Start der Denitrifikationsphase kann in der Regel durch das Abschalten der Belüftungselemente erfolgen. Ein solches Verfahren ist in der Patentschrift DE 199 03 035 C2 offenbart. Bei dem Verfahren handelt es sich um eine Abwasserreinigung, bei der durch kurzzeitige Gasströmungsimpulse das Aufwirbeln von Belebtschlammteilchen während der Denitrifikationsphase vorgenommen wird, um eine bessere Verteilung der Mikroorganismen im Belebungsbecken zu erreichen.

In der DE 40 24 947 A1 ist ein Verfahren zum Reinigen von Abwasser offenbart, wobei im Wege eines Belebungsprozesses eine Nitrifikation und Denitrifikation durchgeführt wird, bei der das gereinigte Abwasser nach erfolgter Schlammsedimentation abgeführt wird. Hierzu ist vorgesehen, den Abwasserzulauf zu kontrollieren, indem der Sauerstoffgehalt, der pH-Wert, das Redoxpotential, die Temperatur und der Füllstand permanent sensorisch erfasst werden. Ebenso ist offenbart, dass Ammonium- und Nitratstickstoffkonzentrationen bei der Nitrifikation/Denitrifikation gemessen werden und über Redoxpotentialmessung eine gezielte Steuerung der Stickstoffelimination bewirkt wird.

Aus der DE 100 34 645 A1 ist ein Verfahren und eine Vorrichtung zur Abwasserüberwachung bekannt. Hierbei wurde ein Verfahren zur Überwachung und Steuerung der Prozessabläufe für die Bestimmung der Eigenschaften von Abwässern unterschiedlicher Zusammenstellung entwickelt, wobei eine Probemenge des zu überwachenden Abwassers in einem Oberwachungsbehälter mit Belebtschlamm und Zehrungssubstrat gemischt wird. Zu dieser Mischung wird Sauerstoff zugeführt und in der Mischung der Sauerstoffverbrauch von Mikroorganismen bestimmt und in einem künstlichen neuronalen Netz ausgewertet. Dabei wird besonders dezidiert darauf eingegangen, dass eine Steuerung der Verfiahrensvorgänge über ein sogenanntes Fuzzy-Kontrollvertahren (Fuzzy-Logic) erfolgen soll.

Aus der EP 08 28 692 B1 ist ein Verfahren zur biologischen Abbausteuerung bekannt. Darin wird ein Verfahren zur Steuerung eines biologischen Abbaus offenbart, insbesondere von wässrigen Medien, bei denen stickstoffhaltige Komponenten in einer Nitrifikation- beziehungsweise Denitrifikationphase zugeführt und über ein Automatisierungssystem entsprechend den erwünschten Parametern gesteuert werden.

In der DE 134 645 ist ein Verfahren zur Überwachung und Steuerung der Prozessabläufe für die Bestimmung von Abwässern unterschiedlicher Zusammensetzung offenbart, bei dem die Geschwindigkeit der Sauerstoffabnahme, also die Steilheit einer Zehrungskurve d(O₂)/dt, zur Steuerung bei einer Abwasserreinigung verwendet wird. Geht man jedoch davon aus, dass bei einem plötzlichen Ammoniumbelastungsstoß aufgrund von Starkregen, Schlammentwässerung oder anderen Ereignissen dieser nicht sofort erkannt wird, da Kriterien wie Sauerstoffzehrung und Gebläseleistung während der Denitrifikationsphase zur Beurteilung der Umsatzmenge von Ammoniumverbindungen nicht eingesetzt werden können, zeigt sich eine Phase, in der die Regelung nicht auf Belastungsstöße reagieren kann. Ein Anstieg beziehungsweise Abfall der Sauerstoffzehrung der Mikroorganismen für die Bewertung der Belastung ist bei einem plötzlichen Belastungsstoß von Ammoniumverbindungen nicht möglich, da nicht belüftet wird. Dies muss umso mehr gelten, da ein ständiger Zulauf von Abwasser in das entsprechende Belebungsbecken erfolgt, sodass ein Anstieg der Ammoniumkonzentration nach dem Lüftungsvorgang nicht zu einem Abbau führen kann, wobei die Reaktionsgeschwindigkeit zwischen der Oxidation des Ammoniums zum Nitrat während der Belüftungsphase und der Reduktion des Nitrates während der Denitrifikationsphase annährend gleich sein müssen, um einen äquivalenten Stoffumsatz zu erzielen.

Bei Kläranlagen, die nach dem Prinzip der biologischen Abwasserbehandlung durch intemittierende Belüftung des Belebtschlammes arbeiten, wird in der Denitrifikationsphase die vorhandene NO₃-N- Fracht mit dem verfügbaren Kohlenstoffquellen (CSB/BSB) biologisch in N₂ umgewandelt. Mit dem Zulaufvolumenstrom der biologischen Behandlungsstufe wird während der Denitrifikation kontinuierlich CSB/BSB aber auch NH₄-N zugeführt. Bei einem ausgeglichenen Nährstoffverhältnis von CSB/NH₄-N (C/N), ist die Reaktionsgeschwindigkeit der Denitrifikation annähernd in der Größenordnung des unvermeidlichen Anstieges des NH₄-N. Das Ende der Denitrifikation kann anhand der Auswertung des Verlauf des Parameters Redoxpotential, zum Beispiel Erkennung Redox-Knick, Redox-Abfall, sicher bestimmt werden.

In der Denitrifikationsphase kann in Kläranlagen bei intermittierendem Betrieb das Problem auftreten, dass ein plötzlicher NH₄-N-Belastungsstoß auf Grund externer oder interner Ereignisse, zum Beispiel Starkregen oder Schlammentwässerung, nicht erkannt wird. Da die Belüftung zu diesem Zeitpunkt ausgeschaltet ist, fallen die Kriterien Sauerstoffzehrung und Gebläseleistung zum Beurteilen des Belastungszustandes weg. Ebenso wenig kann bei diesen Ereignissen über den Verlauf des Parameters Redoxpotential auf Grund des mangelnden CSB/BSB als treibende Kraft der Denitrifikation eine präzise Aussage getroffen werden. Somit passiert die NH₄-N - Fracht unbehandelt das Belebungsbecken, wird über den Ablauf zur Nachklärung ausgetragen und beeinflusst die Ablaufwerte der Anlage negativ.

Der Erfindung liegt die Aufgabe zugrunde, die vorgenannten Nachteile des Standes der Technik zu überwinden und ein Verfahren zu entwickeln, dass eine kurze Reaktionszeit bei Belastungsstößen aufgrund externer oder interner Ereignisse ermöglicht.

Erfindungsgemäß wird die Aufgabe dadurch gelöst, dass als Regelungsparameter für die Denitrifikation die Veränderung des pH-Wertes pro Zeiteinheit verwendet wird. Vorteilhafte Ausgestaltungen des erfindungsgemäßen Verfahrens sind aus den Unteransprüchen zu entnehmen.

Die Erfindung löst das hier zugrundeliegende Problem dadurch, dass über das Maß der Änderung des pH-Wertes Anstieges pro Zeit ein plötzlicher Amoniumbelastungsstoß frühzeitig und schnell erkannt werden kann. Dadurch, dass die Steigung des pH-Wertes über die Zeit als Kriterium zur Abschaltung der Denitrifikationsphase dienen kann, ist man in der Lage auf einen plötzlichen Ammoniumbelastungsstoß sofort zu reagieren. Somit kann ein aus einem plötzlichen Belastungsstoß resultierender Ammoniumanstieg vermieden beziehungsweise reduziert werden. Der pH-Wert gibt auch in unbelüfteten Phasen durch seinen Verlauf und Veränderung seines Anstieges Aufschluss über die Zu- und Abnahme der Ammoniumkonzentration, insbesondere einen NH₄-N - Belastungsstoß. Der Effekt des pH-Wert-Anstiegs lässt sich bereits in den Becken (Belebungs- oder Belüftungsbecken) und Leitungen vor der biologischen Stufe beobachten. So kann eine vor der biologischen Stufe angebrachte pH-Wert-Messung in eine Regelung einbezogen werden, um frühzeitig Belastungsspitzen zu erkennen.

Der pH-Wert liefert somit auch in der unbelüfteten Phase Aufschluss über die NH₄-N - Belastung durch seinen Verlauf. Über das Maß der Änderungen des Anstieges ist ein plötzlicher NH₄-N - Belastungsstoß zu erkennen, welcher auch optisch leicht zu erkennen ist, sodass die Steigung des pH-Wertes über die Zeit, zum Beispiel 0,0011 pH-Wert-Differenz pro Minute, als Kriterium dafür dienen kann, eine Notabschaltung der Denitrifikationsphase durch den sofortigen Start der Belüftung herbeizuführen, um den Belastungsstoß abzubauen. So kann ein aus einem plötzlichen Belastungsstoß resultierender Ammoniumanstieg vermieden bzw. reduziert werden. Der besondere Vorteil besteht hierbei darin, eine schnelle und verzögerungsfreie Regelung zu erreichen.

Für die Erfassung eines Belastungsstoßes ist eine pH-Wert Änderung pro Zeit in einem Wertebereich von 0,001 bis 0,1 pH/min vorgesehen, um eine optimale Bewertung eines plötzlichen Ammoniumanstieges quantifizieren zu können. Innerhalb des Intervalls von 0,001 bis 0,1 pH/min, bevorzugt 0,01 bis 0,08 pH/min, besonders bevorzugt 0,05 pH/min ist ein signifikanter Anstieg des pH-Wertes ein Indiz dafür, dass durch einen Belastungsstoß eine basische Verbindung in das Belebungsbecken eingetragen wurde, die nur durch eine sofortige Belüftungsmaßnahme verhindern kann, dass ein ungewollter Ammoniumanteil innerhalb des geklärten Abwassers enthalten ist. Je nach Standort eines Klärwerkes ist es möglich, dass die Wasserqualität variiert und insbesondere der pH-Wert regionalen Unterschieden unterliegt. Über die Messung des pH-Wert Anstieges pro Zeiteinheit wird ein Regelungsparameter ermittelt, der unabhängig von einem tatsächlichen Belastungsstoß oder Schadstoffeintrag im Sinne einer basischen Verbindung eine schnelle Reaktion ermöglicht. Hierbei wird während der Denitifikation eine pH-Wert Änderung pro Zeit als Regelungsparameter zum sofortigen Start der Belüftung verwendet, um einen Belastungsstoß (primär Ammonium) schnell abbauen zu können.

Teilweise ist es jedoch erforderlich, dass in Abhängigkeit des jeweiligen Standortes des Klärwerkes ein oberer Grenzwert des pH-Wertes für eine Beendigung des Denitrifikationsprozesses erforderlich wird, nämlich dann, wenn sich der pH-Wert über einem gesetzlich vorgeschriebenen Mindestwert bewegt. In einem solchen Fall ist es erforderlich, dass ein oberer Grenzwert festgelegt wird, der zusätzlich als Regelungsparameter verwendet wird.

Alternativ ist auch möglich, als weiteren Regelungsparameter für den Beginn der Belüftungsphase die Änderung der Ammoniumkonzentration zu verwenden. Die Ammoniumkonzentration kann dabei nach verschiedenen Möglichkeiten, insbesondere durch chemische Fällungsreaktion ermittelt werden, indem probehalber Wasser entnommen wird und einer Vergleichsprobe unterzogen wird. Dazu wäre beispielsweise an eine Möglichkeit der Fällung mit Chloriden oder Carbonaten zu denken.

Weiterhin ist es möglich, als Regelungsparameter eine ortsabhängige Änderung des pH-Wertes zu berücksichtigen. Dafür muss an verschiedenen Stellen des Klärbeckens eine Messung des pH-Wertes erfolgen, um möglicherweise einen Gradienten festzustellen, sodass im Falle einer im Bereich des Zuflusses vorhandenen Konzentration gegenüber einer im Becken oder im Abflussbereich liegenden niedrigeren Konzentration ein Belüftungsvorgang eingeleitet werden kann.

Der Regelungsparameter kann auch direkt in den Zuleitungen zu dem Belebungsbecken oder im Belebungsbecken selber gemessen werden, sodass eine eventuell auftretende pH-Wert-Änderung pro Zeitintervall nicht zu einer zeitlichen Verzögerung des Belüftungsvorganges im Belebungsbecken führt. Die Art des Messvorganges ist dabei an die vorliegenden Randbedingungen anzupassen, sodass beispielsweise innerhalb von Rohrleitungen ein Spektrometer oder in Abflussleitungen eine Probenentnahme möglich ist, die in einem Nachweisverfahren isoliert oder auch implementiert zur Regelung verwendet werden kann.

Die Bestimmung des Regelungsparameters kann in Abhängigkeit von den örtlichen Gegebenheiten gegebenenfalls auch nach dem Aufenthalt des Abwassers im Belebungsbecken stattfinden, sodass ein Konzentrationsgradient unabhängig von der örtlichen Probenentnahme ermittelt wird. Alternativ kann der Sauerstoffgehalt, das Redoxpotential oder die Temperatur als Regelungsparameter zusätzlich verwendet werden.

Zur Ermittlung des Regelungsparameters, insbesondere des pH-Wert-Anstieges pro Zeiteinheit sind verschiedene Sensoren denkbar, die einsetzbar sind, sowohl innerhalb als auch außerhalb der Abwasserkläranlage. Damit sind sowohl die Zuleitungen, Abflussleitungen, wie auch die Belebungsbecken selbst gemeint. Eine Änderung des pH-Wertes pro Zeitintervall kann hierbei colormetrisch, conduktometrisch, spektrometrisch oder impedantisch erfasst werden.

Um den Anstieg des pH-Wertes pro Zeiteinheit zum Abschalten der Denitrifikationsphase sicher nutzen zu können ist es erforderlich die Berechnung und "Dämpfung" der Werte zu berücksichtigen. Die verwendete Messtechnik und die Signalverläufe sind im Belebungsbecken einer Kläranlage selten so klar, dass sie ein deutliches, kontinuierliches Signal liefern. Oft liegt ein leichtes "Rauschen" der Signale ("Zittern" der Signalkurve) vor, sodass man eine Glättung durchführen muss. Beispielsweise kann der aktuelle Messwert ins Verhältnis zu einem Messwert einige Minuten vorher gesetzt werden, um ein leichtes Rauschen der Signale zu glätten. Falls einer der beiden Werte jedoch deutlich abweicht, bringt dies ebenfalls ein "Rauschen" in die Kurve der Ableitung. Daher kann es vorteilhaft sein, die Steigung einer geglätteten Kurve zu messen. Die Ableitung der geglätteten pH-Wert-Kurve weist deutliche Ausschläge auf, welche als Regelungsparameter nutzbar sind.

Gegebenenfalls ist es auch erforderlich den Regelungsparameter zur Ermittlung eines eindeutigen Kurvenverlaufes durch Bildung eines Mittelwertes zu glätten. Dabei wird über eine Verhältnissetzung zu einem vorher aufgenommenen Parameter der Regelungsparameter ins Verhältnis gesetzt, sodass beispielsweise ein Kurvenverlauf für die pH-Wert-Messung erreicht wird, der nicht mehr von zu starken Schwankungen durch Hintergrundrauschen beeinflusst wird.

Die verschiedenen Möglichkeiten eine Funktionskurve der 1. Ableitung F(x) = ΔpH / Δt zu erhalten, müssen miteinander verglichen werden, um die präziseste und sicherste Möglichkeit des Notabschaltens zu finden. Als dritte Variante und sehr viel versprechend sollte von zwei aufeinander folgenden Punkten die Ableitung berechnet werden und diese Ableitung über einen Zeitraum von zum Beispiel 10 Minuten gemittelt werden.

Hierbei sollte das Prinzip des Notabschaltens, dass heißt, das Einsetzen der Belüftung nach Glättung der gemessenen pH-Werte durch Bestimmung der Steigung der ersten Ableitung erfolgen. Hierdurch wird gewährleistet, dass eine präzise und sichere Möglichkeit des Notabschaltens gefunden wird und Ausreißer gedämpft werden, damit die reelle Kurve des pH-Wertes am wenigsten verfälscht wird. Dies ist auch zum Teil deswegen notwendig, da durch die Bewegung der Flüssigkeiten in den Bewegungsbecken beziehungsweise in den Ab- und Zuleitungen eine örtliche Schwankung der Konzentrationen vorliegen kann.

Ergänzend können weitere Parameter, wie zum Beispiel Zulaufmenge, als Kriterium hinzugezogen werden. Diese können als zusätzlich zu erfüllendes Kriterium gesehen werden oder durch Gewichtung mit Fuzzy-Logic als Kombinationsschalter eingesetzt werden. Auch eine Auswertung und Generierung eines Schaltsignals durch Fuzzy-Pattern-Mustererkennung erscheint möglich.

Die Erfindung wird anhand der folgenden Figuren nochmals näher erläutert.

Es zeigt:
- Figur 1: einen Tagesverlauf des Sauerstoffgehaltes und des pH-Wertes mit einem starken Belastungsstoß gegen 10.00 Uhr,
- Figur 2: zeigt den Tagesverlauf gemäß Figur 1 nochmals, wobei zusätzlich anhand von eingezeichneten Steigungsdreiecken 04:00 Uhr (normale Belastung) und 10:00 Uhr (starke Belastung) der Steigungsverlauf des pH-Wertes hervorgehoben wurde und
- Figur 3: zeigt den pH-Wert-Verlauf über einen gleitenden Mittelwert sowie die über den Verlauf des Anstieges ermittelte Schaltgrenze.

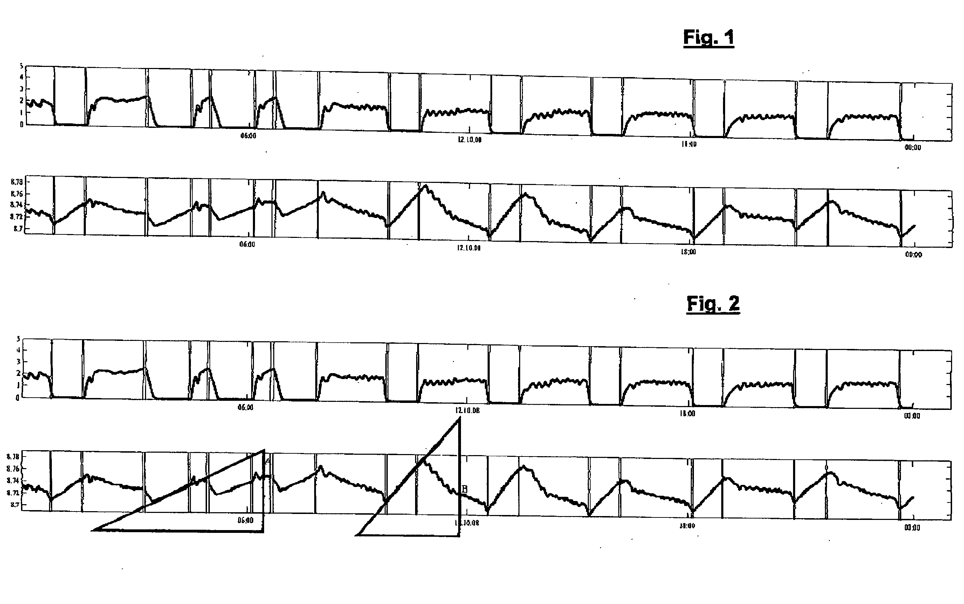

Figur 1 zeigt in der oberen Figurenhälfte den Verlauf des Sauerstoffgehaltes über den Zeitraum eines Tages, wobei die X-Koordinate die Tageszeit und die Y-Koordinate in Milligramm pro Liter angegeben ist. Der Sauerstoffgehalt schwankt im Laufe des Tages in Abhängigkeit von der Ammoniumkonzentration und dem Zulauf in die Klärbecken. Parallel dazu verändert sich der pH-Wert über den Tagesverlauf, wobei deutlich wird, dass der pH-Wert-Anstieg über die Zeit in Abhängigkeit der Ammoniumkonzentration und des Sauerstoffgehaltes variiert.

Figur 2 zeigt den Tagesverlauf gemäß Figur 1, wobei zusätzlich in der unteren Kurve des pH-Wertes zu zwei verschiedenen Uhrzeiten Steigungsdreiecke eingezeichnet sind, aus denen deutlich wird, dass beispielsweise die Steigung A (04:00 Uhr normale Belastung) in einer Größenordnung von 0,0004 pH-Wert-Differenz pro Minute und die Steigung B (10:00 Uhr starke Belastung) in einer Größenordnung von 0,0012 pH-Wert-Differenz pro Minute liegt. Der erhöhte Anstieg des pH-Wertes ist hierbei auf eine höhere Ammoniumkonzentration zurückzuführen und somit eignet sich ein gemessener Anstieg pro Zeiteinheit hervorragend dafür, um eine schnelle Reaktionssteuerung der Kläranlage vorzunehmen.

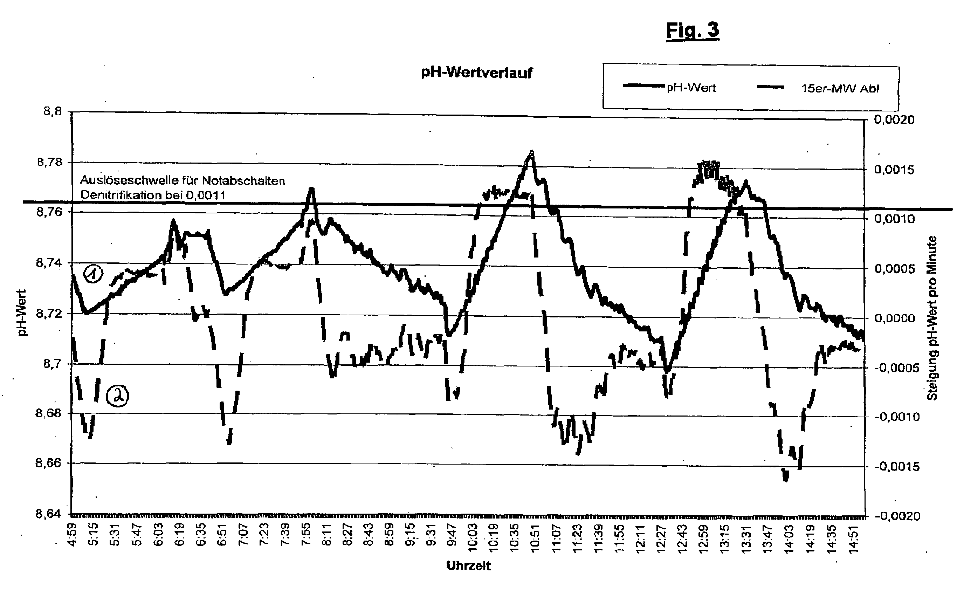

Figur 3 zeigt den Verlauf des pH-Wertes in einem Zeitintervall von 5 bis 14.51 Uhr, wobei zu dem eigentlichen Signal eine Glättung des pH-Wert-Kurvenverlaufes erfolgt ist, beispielsweise durch Ermittlung der Steigung über einen gleitenden Mittelwert der 15 letzten Ableitungen. Die X-Koordinate zeigt die Uhrzeit, während die Y-Koordinate links den pH-Wert und rechts die Steigung des pH-Wertes pro Minute aufzeigt. Hieraus wird ersichtlich, dass der ursprüngliche Kurvenverlauf 1 des pH-Wertes nach erfolgter Glättung gemäß Kurvenverlauf 2 zu einer signifikanten Erkennung eines Signalpegels führt, der als Auslöseschwelle für ein Notabschalten der Denitrifikation verwendet werden kann.

## Patentansprüche

1. Verfahren zur Regelung der Nitrifikation und/oder Denitrifikation einer Kläranlage, wobei zumindest ein Parameter, beispielsweise der pH-Wert, das Redoxpotential oder der Sauerstoffgehalt, zur Regelung verwendet wird,
**dadurch gekennzeichnet,**
**dass** als Regelungsparameter die Veränderung des pH-Wertes pro Zeiteinheit verwendet wird.

2. Verfahren nach Anspruch 1,
**dadurch gekennzeichnet,**
**dass** während der Denitrifikation eine pH-Wert Änderung pro Zeit als Regelungsparameter zum sofortigen Start der Belüftung verwendet wird, um einen Belastungsstoß schnell abzubauen.

3. Verfahren nach Anspruch 1 oder 2,
**dadurch gekennzeichnet,**
**dass** eine Änderung der Nitrifikations- und/oder Denitrifikationsphase einerseits durch den pH-Wert-Anstieg und andererseits durch einen Grenzwert des pH-Wertes bestimmt wird.

4. Verfahren nach Anspruch 1, 2 oder 3,
**dadurch gekennzeichnet,**
**dass** als weiterer Regelungsparameter die Änderung der Ammoniumkonzentration, des pH-Wertes, des Sauerstoffgehalts, des Redoxpotentials oder die Temperatur verwendet wird.

5. Verfahren nach einem der Ansprüche 1 bis 4,
**dadurch gekennzeichnet,**
**dass** die Änderung des pH-Wertes pro Zeitintervall colormetrisch, conduktometrisch, spektrometrisch oder impedantisch erfasst wird.

6. Verfahren nach einem der Ansprüche 1 bis 5,
**dadurch gekennzeichnet,**
**dass** als Regelungsparameter eine ortsabhängige Änderung des pH-Wertes verwendet wird.

7. Verfahren nach einem der Ansprüche 1 bis 6,
**dadurch gekennzeichnet,**
**dass** die Bestimmung der Regelungsparameter in einer biologischen Stufe, zum Beispiel Festbett- oder Fließbettreaktor, vorzugsweise jedoch in einem Belebungsbecken erfolgt.

8. Verfahren nach einem der Ansprüche 1 bis 7,
**dadurch gekennzeichnet,**
**dass** die Bestimmung der Regelungsparameter vor, während oder nach dem Aufenthalt des Abwassers in einem Belebungsbecken und/oder der Belebungsleitungen erfolgt.

9. Verfahren nach einem der Ansprüche 1 bis 8,
**dadurch gekennzeichnet,**
**dass** nach der Bestimmung des wesentlichen Regelungsparameters eine sofortige Nitirifikation eingeleitet wird.

10. Verfahren nach Anspruch 9,
**dadurch gekennzeichnet,**
**dass** eine Nitrifikation durch Aktivierung der Belüftung eingeleitet wird.

11. Verfahren nach Anspruch 9 und 10,
**dadurch gekennzeichnet,**
**dass** die Erfassung der Messwerte zur Ermittlung der Regelungsparameter über Sensoren erfolgt.

12. Verfahren nach einem der Ansprüche 1 bis 11,
**dadurch gekennzeichnet,**
**dass** die Regelungsparameter geglättet werden, wobei vorzugsweise die Steigung einer geglätteten Kurve verwendet wird.

13. Verfahren nach einem der Ansprüche 1 bis 12,
**dadurch gekennzeichnet,**
**dass** der Regelungsparameter über eine Verhältnissetzung zu einem zuvor aufgenommenen artgleichen Parameter geglättet wird.

14. Verfahren nach einem der Ansprüche 1 bis 13,
**dadurch gekennzeichnet,**
**dass** die Messwerte durch mehrere Sensoren erfasst werden und ein vorzugsweise ortsabhängiger Mittelwert gebildet wird.

15. Verfahren nach einem der Ansprüche 1 bis 14,
**dadurch gekennzeichnet,**
**dass** eine potentielle Belüftungssteuerung innerhalb einer Kläranlage in Abhängigkeit der gemessenen Regelungsparameter, insbesondere des pH-Wert-Anstiegs, aktiviert wird.
